# EUROPEAN PATENT APPLICATION

(11) **EP 4 496 173 A1**
(43) Date of publication of application: **22.01.2025**
(21) Application number: 24183925.7
(22) Date of filing: 24.06.2024
(51) Int. Cl.: H02J 7/00, H01M 10/48, H01M 50/581

(54) **TECHNIQUE OF INHIBITING DISCHARGE CURRENT IN BATTERY PACK FOR ELECTRIC WORK MACHINE**

(30) Priority: 27.06.2023 JP 2023105114
(71) Applicant: Makita Corporation, Anjo-shi Aichi 446-8502 (JP)
(72) Inventor: GYODA, Minoru, Anjo-shi, 446-8502 (JP)
(74) Representative: Kramer Barske Schmidtchen Patentanwälte PartG mbB

(57) **Abstract**

The battery pack (10) for an electric work machine in one aspect of the present disclosure includes a battery (5), an attachment port (4), a current path (27; 28), at least one fuse (41a; 41b; 42a; 42b), a temperature detector (44), and a control circuit (31). The battery includes a positive electrode and a negative electrode. The attachment port is detachably attached to the electric work machine. The current path is coupled to the positive electrode or the negative electrode. The current path delivers a discharge current from the battery to the electric work machine. The at least one fuse is on the current path. The temperature detector outputs a temperature signal indicating a fuse temperature. The control circuit reduces or stops the discharge current based on the fuse temperature having satisfied or satisfying a discharge inhibition requirement.

## Description

### CROSS-REFERENCE TO RELATED APPLICATIONS

This application claims the benefit of Japanese Patent Application No. 2023-105114 filed on June 27, 2023 with the Japan Patent Office, the entire disclosure of which is incorporated herein by reference.

### BACKGROUND

The present disclosure relates to a technique of inhibiting discharge current in a battery pack used in an electric work machine.

Japanese Patent No. 6418874 discloses a battery pack attached to an electric power tool. This battery pack includes a fuse. The fuse is disposed on a current path through which discharge current flows from the battery to the electric power tool. The fuse protects the battery pack from excessive discharge current.

### SUMMARY

In a case where temperature around the battery pack is high or the electric power tool is continuously used for a long time, the fuse may be externally heated and temperature of the fuse increases. This may cause the fuse to melt unintentionally.

Desirably, one aspect of the present disclosure provides a battery pack for an electric work machine that can inhibit a fuse from melting unintentionally.

One aspect of the present disclosure provides a battery pack for an electric work machine that includes a battery, an attachment port, a current path, at least one fuse, a temperature detector, and a control circuit.

The battery includes a positive electrode and a negative electrode. The attachment port is detachably attached to the electric work machine. The electric work machine receives electric power from the battery to thereby be driven. The current path is coupled to the positive electrode or the negative electrode. The current path deliver a discharge current from the battery to the electric work machine. The at least one fuse is on the current path. The at least one fuse melts itself to thereby interrupt the current path. The temperature detector outputs a temperature signal indicating fuse temperature. The fuse temperature corresponds to the temperature of the at least one fuse.

The control circuit obtains the fuse temperature based on the temperature signal. The control circuit outputs a command to reduce or stop the discharge current based on the fuse temperature obtained having satisfied or satisfying a discharge inhibition requirement. The discharge inhibition requirement is required to reduce or stop the discharge current.

In such a battery pack for an electric work machine, the command is outputted based on a condition that the fuse temperature satisfied the discharge inhibition requirement. Based on the command, the battery pack for an electric work machine or the electric work machine can identify that the discharge current should be reduced or stopped. This enables the battery pack for an electric work machine or the electric work machine to reduce or stop the discharge current by using various methods. It is therefore possible to inhibit the at least one fuse from melting unintentionally.

Another aspect of the present disclosure provides a method of inhibiting a discharge current in a battery pack for an electric work machine. This method includes detecting a temperature of a fuse, the fuse being on a current path, the current path being configured to deliver the discharge current from a battery, and the battery being in the battery pack. The method also includes reducing or stopping the discharge current in a case where the temperature of the fuse satisfies a discharge inhibition requirement, the discharge inhibition requirement being required to reduce or stop the discharge current.

Such a method can render the same effect as the aforementioned battery pack for an electric work machine.

### BRIEF DESCRIPTION OF THE DRAWINGS

An example embodiment of the present disclosure will be described hereinafter with reference to the accompanying drawings, in which:
FIG. 1 is a first perspective view of a battery pack of an embodiment;
FIG. 2 is a second perspective view of the battery pack of the embodiment;
FIG. 3 is a perspective view of the battery pack with an upper cover removed;
FIG. 4 is a perspective view of a circuit board;
FIG. 5 shows an upper surface of the circuit board;
FIG. 6 shows a side surface of the circuit board;
FIG. 7 shows a bottom surface of the circuit board;
FIG. 8 is a diagram explaining an electrical configuration of the battery pack;
FIG. 9 is a diagram explaining an electrical configuration of an electric work machine of the embodiment;
FIG. 10 is a diagram explaining an operation example when discharging the battery pack;
FIG. 11 is a flow chart of a fuse temperature monitoring process;
FIG. 12 is a diagram explaining one example of a lighting mode of a display;
FIG. 13 shows an upper surface of a first variation of the circuit board;
FIG. 14 shows a bottom surface of the first variation of the circuit board;
FIG. 15 shows an upper surface of a second variation of the circuit board; and
FIG. 16 shows an upper surface of a third variation of the circuit board.

### DETAILED DESCRIPTION OF EXEMPLARY EMBODIMENTS

### [1. Overview of Embodiments]

In the present disclosure, terms such as "first" and "second" merely intend to distinguish elements from each other but do not intend to limit the order or the number of the elements. Accordingly, the first element may be referred to as the second element, and likewise, the second element may be referred to as the first element. In addition, the first element may be provided without any second element, and likewise, the second element may be provided without any first element.

One embodiment may provide a battery pack for an electric work machine (hereinafter abbreviated as "battery pack") that includes at least any one of the following Features 1 to 8.

Feature 1: a battery that includes a positive electrode and a negative electrode.

Feature 2: an attachment port configured to be detachably attached to the electric work machine (or a battery-powered device). The electric work machine (or the battery-powered device) is configured to receive an electric power from the battery to thereby be driven.

Feature 3: a current path configured to (i) be coupled to the positive electrode or the negative electrode and (ii) deliver a discharge current from the battery to the electric work machine.

Feature 4: at least one fuse (i) on the current path and (ii) configured to melt to thereby interrupt (or disconnect) the current path.

Feature 5: a temperature detector configured to output a temperature signal indicating a fuse temperature. The fuse temperature corresponds to a temperature of the at least one fuse.

Feature 6: a control circuit (or a controller).

Feature 7: the control circuit is configured to obtain the fuse temperature based on the temperature signal.

Feature 8: the control circuit is configured to output a command to reduce or stop the discharge current based on the fuse temperature obtained (or the fuse temperature represented by the temperature signal) having satisfied or satisfying a discharge inhibition requirement. The discharge inhibition requirement may be required to reduce or stop the discharge current. The command may direct or order to reduce or stop the discharge current.

The temperature detector may be configured to detect the fuse temperature. The temperature signal may indicate the detected fuse temperature. Specifically, the fuse temperature may be a temperature of a heat receiving portion of the battery pack. The heat receiving portion receives heat generated in the at least one fuse from the at least one fuse. In other words, the heat generated in the at least one fuse is conducted to the heat receiving portion. The heat receiving portion may be directly or indirectly in contact with a part of or all of the at least one fuse. The temperature of the heat receiving portion can vary in response to the temperature of the at least one fuse varying. In other words, the temperature of the heat receiving portion directly or indirectly indicates the temperature of the at least one fuse. The heat of a part of the at least one fuse may be conducted to the heat receiving portion, or the heat of each of the at least one fuse may be conducted to the heat receiving portion. The temperature detector may be in direct or indirect contact with the heat receiving portion. The temperature detector may be in direct contact with a part of or all of the at least one fuse. The temperature detector may be separated from the at least one fuse.

Each of the at least one fuse may be configured to melt based on a condition that the temperature of the fuse satisfied a corresponding melting requirement. The melting requirement may be satisfied based on a condition that the temperature of the fuse exceeds a melting threshold. The melting threshold may be the lowest temperature at which the fuse can melt. The temperature of the fuse may vary depending on the magnitude of an electric current that flows through the fuse. The temperature of the fuse may vary depending on the ambient temperature of the fuse.

The battery pack and/or the electric work machine may reduce or stop the discharge current in any manner based on the command. For example, based on the command being outputted, the battery pack may be configured to output a signal that directly or indirectly indicates the command to the electric work machine. The electric work machine may be configured to inhibit or stop the discharge current based on receiving of the signal. The electric work machine may include a motor. In this case, the electric work machine may stop or reduce the electric power to the motor based on receiving of the signal from the battery pack. The electric work machine may be configured to completely stop the consumption of the electric power based on receiving of the signal.

The battery pack may be configured to forcibly interrupt the discharge current based on the command, for example. More specifically, the battery pack may include a switch on the current path, for example. The control circuit may turn off the switch to interrupt the current path.

Each of the at least one fuse may be called a fuse element, for example. Any and all electric devices, configured to melt by Joule heat caused by electric current that flows through themselves, are included in the "fuse" of the present disclosure.

In the battery pack including at least Features 1 to 8, the command is outputted based on a condition that the fuse temperature satisfied or satisfies the discharge inhibition requirement. Based on the command being outputted, the battery pack or the electric work machine can identify that the discharge current should be reduced or stopped. Based on this identification, the electric work machine is able to reduce or stop the discharge current by using various methods. Accordingly, it is possible to inhibit the fuse from melting unintentionally.

One embodiment may include following Feature 9 in addition to or in place of at least any one of aforementioned Features 1 to 8.

Feature 9: the discharge inhibition requirement is satisfied based on the fuse temperature having reached a first temperature threshold (in other words, that the fuse temperature is greater than or equal to the first temperature threshold).

The first temperature threshold may be less than the melting threshold. In a case where the at least one fuse includes the melting threshold different from each other, the first temperature threshold may be smaller than the smallest melting threshold.

The battery pack that includes at least Features 1 to 9 can properly assess whether the discharge inhibition requirement has been satisfied.

One embodiment may include following Feature 10 in addition to or in place of at least any one of aforementioned Features 1 to 9.

Feature 10: the control circuit is configured to cancel the command based on (i) the command being outputted or having been outputted and (ii) the fuse temperature being less than or equal to a second temperature threshold.

In other words, the control circuit may be configured to cancel the command based on the fuse temperature having decreased from the first temperature threshold to the second temperature threshold after the command was outputted.

Cancelling of the command may include stopping the output of the command, and/or may include outputting a different command in place of the command.

The battery pack that includes at least Features 1 to 10 can inhibit the discharge current from being reduced or stopped unnecessarily.

One embodiment may include following Feature 11 in addition to or in place of at least any one of aforementioned Features 1 to 9. In addition, one embodiment may include following Feature 12 in place of aforementioned Feature 10.

Feature 11: the electric work machine includes a manual switch configured to be manually moved by a user of the electric work machine to thereby direct to drive the electric work machine.

Feature 12: the control circuit is configured to cancel the command based on (i) the command being outputted or having been outputted, (ii) the fuse temperature being less than or equal to the second temperature threshold, and (iii) the manual switch not being manually moved (in other words, being released).

The battery pack that includes at least Features 1 to 9, 11, and 12 can cancel the command at an appropriate timing.

In a case where an embodiment includes aforementioned Features 9 and 10, or aforementioned Features 9, 11, and 12, the embodiment may further include following Feature 13.

Feature 13: the second temperature threshold is smaller than the first temperature threshold.

The battery pack that includes at least Features 1 to 10, and 13, or the battery pack that includes at least Features 1 to 9, and 11 to 13 can cancel the command at more appropriate timing.

One embodiment may include following Feature 14 in addition to or in place of at least any one of aforementioned Features 1 to 13.

Feature 14: a circuit board having the at least one fuse and the temperature detector mounted thereon.

In the battery pack that includes at least Features 1 to 8, and 14, mounting of the at least one fuse and the temperature detector can be facilitated.

In a case where an embodiment includes aforementioned Feature 14, the embodiment may further include at least any one of following Features 15 to 17.

Feature 15: the circuit board includes a first surface and a second surface. The second surface corresponds to a surface situated on the opposite side of the first surface.

Feature 16: the at least one fuse is mounted on the first surface.

Feature 17: the temperature detector is mounted on the second surface.

The second surface faces the first surface across the circuit board. In other words, in a case where the first surface is defined as a front surface of the circuit board, for example, the second surface corresponds to a back surface of the circuit board.

In the battery pack that includes at least Features 1 to 8, and 14 to 17, the at least one fuse and the temperature detector can be effectively mounted on the circuit board.

In a case where an embodiment includes aforementioned Feature 16, the embodiment may further include at least any one of following Features 18 and 19.

Feature 18: the at least one fuse includes a first fuse.

Feature 19: the temperature detector at least partially faces the first fuse across the circuit board. In other words, the temperature detector at least partially overlaps with the first fuse when the circuit board is viewed from a direction perpendicular to the circuit board (or to a board surface of the circuit board).

In the battery pack that includes at least Features 1 to 8, and 14 to 19, the temperature detector can properly detect the fuse temperature.

In a case where an embodiment includes aforementioned Feature 18, the embodiment may further include at least any one of following Features 20 to 22.

Feature 20: the at least one fuse further includes a second fuse.

Feature 21: the first fuse and the second fuse are on the first surface and disposed away from each other.

Feature 22: the temperature detector at least partially faces a middle region across the circuit board. The middle region may be between the first fuse and the second fuse on the first surface.

In the battery pack that includes at least Features 1 to 8, and 14 to 22, the temperature detector can properly detect the fuse temperature.

In a case where an embodiment includes aforementioned Feature 20, the embodiment may further include following Feature 23.

Feature 23: the temperature detector at least partially faces, across the circuit board, (i) the first fuse and/or the second fuse, and (ii) the middle region.

In the battery pack that includes at least Features 1 to 8, and 14 to 23, the temperature detector can properly detect the fuse temperature.

One embodiment may include following Feature 24 in addition to or in place of at least any one of aforementioned Features 1 to 23.

Feature 24: an output terminal configured to (i) be coupled to an input terminal of the electric work machine based on the attachment port being attached to the electric work machine and (ii) deliver the command to the input terminal via the output terminal.

The electric work machine may be configured to inhibit or suppress, based on receiving of the command via the input terminal, the discharge current inputted from the battery to the electric work machine.

In the battery pack that includes at least Features 1 to 8, and 24, inhibiting or stopping of the discharge current can be achieved substantially by the electric work machine.

In a case where an embodiment includes aforementioned feature 24, the embodiment may further include following Feature 25.

Feature 25: the output terminal is on the first surface.

The battery pack may include a heat dissipation member (or a heat sink). The heat dissipation member is configured (i) to receive heat from the at least one fuse and (ii) to dissipate the heat to the atmosphere (surrounding space). The heat dissipation member can function as a heat sink. The heat dissipation member may include a copper plate. The heat dissipation member may be near the at least one fuse. The heat dissipation member may be mounted on the circuit board (on the first surface or the second surface).

One embodiment may provide a method of inhibiting discharge current in a battery pack, the method including at least any one of following Features 26 and 27.

Feature 26: to detect temperature of a fuse. The fuse is on a current path. The current path is configured to deliver the discharge current from a battery. The battery is in the battery pack.

Feature 27: to reduce or stop the discharge current in a case where the temperature of the fuse satisfies a discharge inhibition requirement. The discharge inhibition requirement is required to reduce or stop the discharge current.

A method that includes Features 26 and 27 can inhibit the fuse from melting unintentionally.

One embodiment may include at least one of following Features 28 and 29 in addition to or in place of aforementioned Features 26 and 27.

Feature 28: to mount the fuse on a first surface of a circuit board.

Feature 29: to mount a temperature detector on the second surface of the circuit board. The temperature detector is configured to detect the temperature of the fuse. The second surface corresponds to a surface on an opposite side of the first surface.

In one embodiment, aforementioned Features 1 to 29 may be combined in any combinations.

In one embodiment, any one of aforementioned Features 1 to 29 may be excluded.

Examples of the electric work machine may include various on-site electric apparatus configured to be used at a work site such as home carpentry, manufacturing, gardening, and construction, and driven by the battery; specifically, electric power tools for stone processing, metal processing, or wood processing, machinery for gardening, and devices for creating an environment of a work site; more specifically, electric blower, electric hammer, electric hammer drill, electric drill, electric driver, electric wrench, electric grinder, electric disc saw, electric reciprocating saw, electric jigsaw, electric cutter, electric chainsaw, electric planer, electric nail gun (including riveting machine), electric hedge trimmer, electric lawn mower, electric lawn trimmer, electric grass cutter, electric cleaner, electric sprayer, electric spreader, electric dust collector, robot cleaner (a robotic vacuum (or a robot vacuum)), battery-powered wheel barrow, battery-driven bicycle. The battery pack may be able to be detachably mounted to and operate electric work machine other than those mentioned above, for example, laser range finder (or laser distance measuring instrument), laser marking device, photodetector of laser marking device, wall scanner, radio, television, speaker, electric cooler/warmer, electric kettle, coffee machine (or coffee maker or coffee distiller), microwave oven, fan vest, and heating jacket.

In one embodiment, the control circuit may be integrated with a single electronic unit, a single electronic device, or a single circuit board.

In one embodiment, the control circuit may be obtained by combining two or more electronic circuits, two or more electronic unit, or two or more electronic devices disposed separately in the battery pack.

In one embodiment, the control circuit may include a microcomputer (or a microcontroller or a microprocessor), wired logic, an Application Specific Integrated Circuit (ASIC), an Application Specific Standard Product (ASSP), a programmable logic device (such as a field programmable gate array (FPGA)), a discrete electronic component, and/or a combination of the above.

### [2. Specific Example Embodiment]

Hereinafter, example embodiment of the present disclosure will be explained.

### [2-1. Embodiment]

### (2-1-1) Overall Configuration of Battery Pack

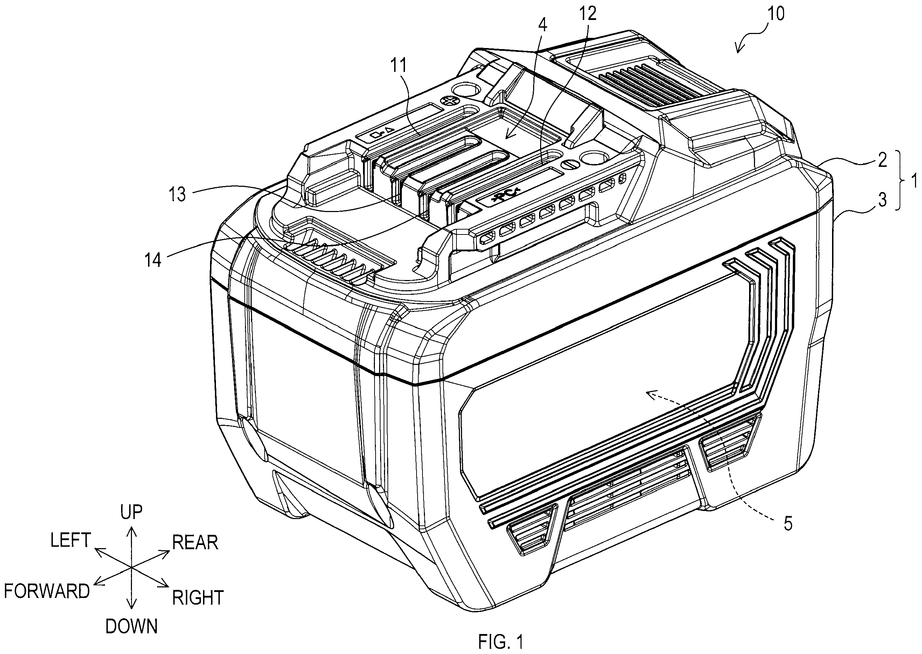

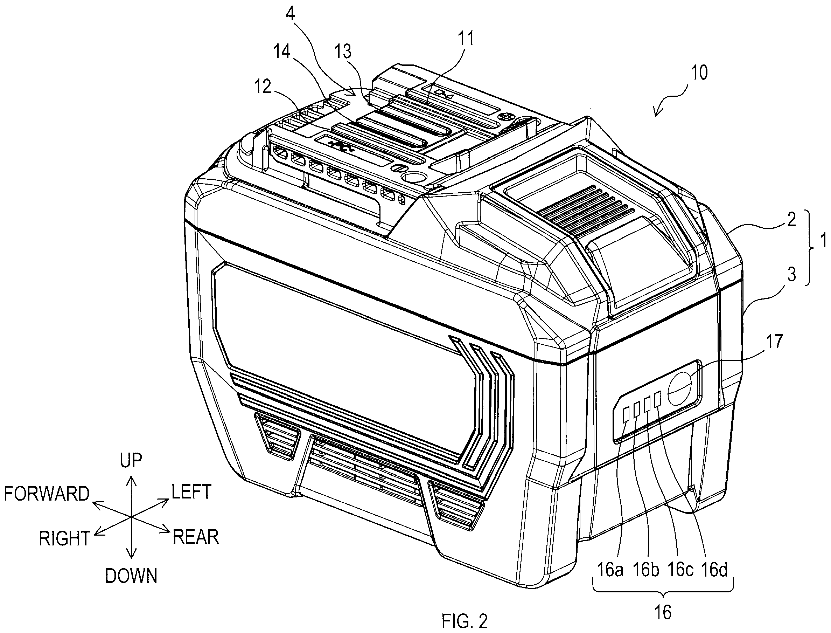

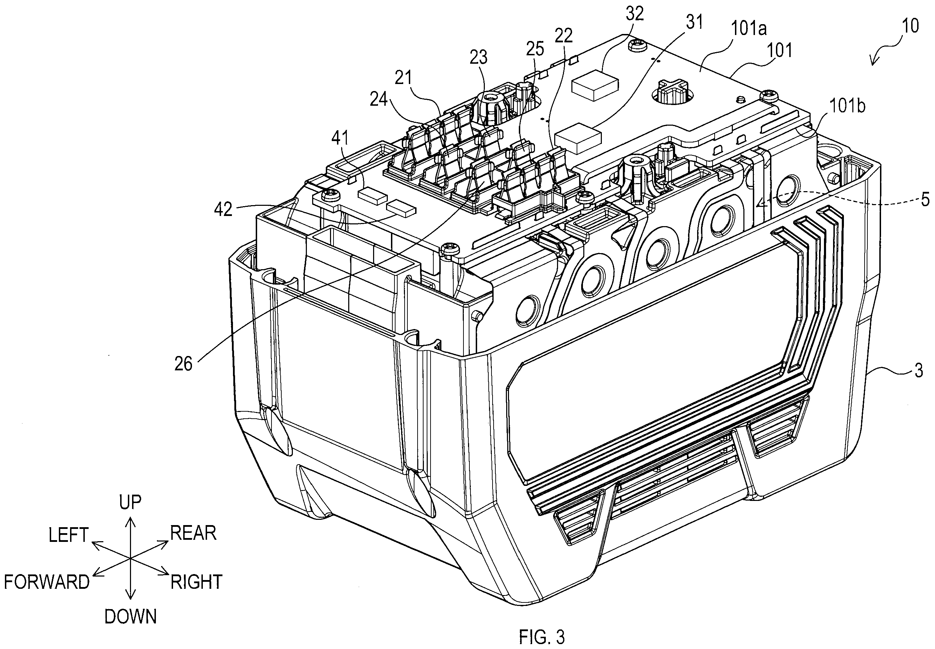

As shown in FIG. 1 and FIG. 2, a battery pack 10 of the present embodiment includes a housing 1. The housing 1 has a shape of a substantially rectangular parallelepiped. The housing 1 includes an upper case 2 and a lower case 3. The upper case 2 has a shape of a tray. The upper case 2 is open downwards. The lower case 3 has a shape of a substantially rectangular parallelepiped. The lower case 3 is open upwards. FIG. 1 and FIG. 2 show a state where the upper case 2 is attached to the lower case 3. The housing 1 accommodates a battery 5 and a circuit board 101 (see FIG. 3).

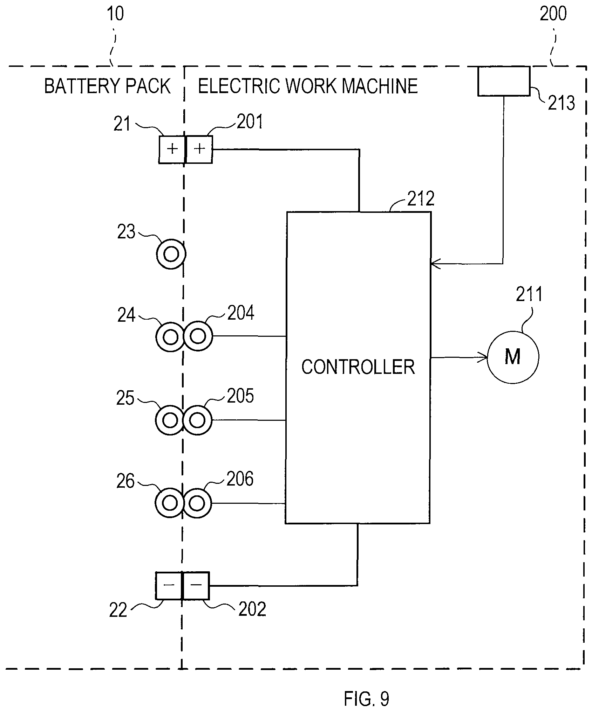

The battery pack 10 is configured to supply an electric power to an electric work machine 200 (see FIG. 9) to operate the electric work machine 200. As shown in FIG. 9, the electric work machine 200 includes a device positive terminal 201 and a device negative terminal 202. The electric work machine 200 includes one or more device auxiliary terminals. It is only an example, but the one or more device auxiliary terminals of the present embodiment include a device DT terminal 204, a device TR terminal 205, and a device DS terminal 206.

The battery pack 10 is further configured to receive a charging electric power from a battery charger (not shown) and to thereby charge the battery 5. The battery charger includes a charger positive terminal (not shown) and a charger negative terminal (not shown). The battery charger includes one or more battery charging auxiliary terminals. It is only an example, but the one or more battery charging auxiliary terminals of the present embodiment include a charger CS terminal (not shown), a charger DT terminal (not shown), a charger TR terminal (not shown), and a charger DS terminal (not shown).

The battery pack 10 can be selectively attached to various electric work machines (or battery-powered devices). The battery pack 10 can supply the electric power to the electric work machine to which the battery pack 10 is attached and thereby operate the electric work machine. The various electric work machines include at least one of the various on-site electric apparatus. The electric work machine 200 shown in FIG. 9 is one example of the various electric work machines. The "electric work machine 200" described at least from the article (2-1-1) to the following article (2-1-3) of the present disclosure can be read as "an electric work machine among the various electric work machines to which the battery park 10 is attached or is to be attached".

The battery 5 of the present embodiment is a rechargeable battery that can be recharged repeatedly. The battery 5 may be a lithium-ion battery, for example. The battery 5 includes cells that are coupled in series with each other. The battery 5 may be a primary battery. The rated voltage value of the battery 5 of the present embodiment is 36 V, for example.

The upper case 2 includes an attachment port 4 on its upper surface. The attachment port 4 is detachably attached to the electric work machine 200 or the battery charger. In a case where the attachment port 4 is attached to the electric work machine 200, the battery pack 10 can supply an electric current to the electric work machine 200. The electric current supplied from the battery pack 10 to the electric work machine 200 is hereinafter called "discharge current". In a case where the attachment port 4 is coupled to the battery charger, the battery pack 10 can receive a charging current from the battery charger. The charging current charges the battery 5.

The attachment port 4 includes a first insertion opening 11. In response to the attachment port 4 being attached to the electric work machine 200, the device positive terminal 201 is inserted into the first insertion opening 11. In response to the attachment port 4 being attached to the battery charger, the charger positive terminal is inserted into the first insertion opening 11.

The attachment port 4 includes a second insertion opening 12. In response to the attachment port 4 being attached to the electric work machine 200, the device negative terminal 202 is inserted into the second insertion opening 12. In response to the attachment port 4 being attached to the battery charger, the charger negative terminal is inserted into the second insertion opening 12.

The attachment port 4 includes a third insertion opening 13. In response to the attachment port 4 being attached to the electric work machine 200, the device DT terminal 204 is inserted into the third insertion opening 13. In response to the attachment port 4 being attached to the battery charger, the charger CS terminal and the charger DT terminal are inserted into the third insertion opening 13.

The attachment port 4 includes a fourth insertion opening 14. In response to the attachment port 4 being attached to the electric work machine 200, the device TR terminal 205 and the device DS terminal 206 are inserted into the fourth insertion opening 14. In response to the attachment port 4 being attached to the battery charger, the charger TR terminal and the charger DS terminal are inserted into the fourth insertion opening 14.

Each of the first to the fourth insertion openings 11 to 14 extends in front-rear directions. The first to the fourth insertion openings 11, 12, 13, and 14 are arranged from left to right in this order.

As shown in FIG. 2, the battery pack 10 includes a display 16. The display 16 displays remaining energy information that shows remaining energy of the battery 5 (hereinafter referred to as "battery remaining energy"). In the present embodiment, the display 16 may include, for example, a first LED 16a, a second LED 16b, a third LED 16c, and a fourth LED 16d. The battery pack 10 includes a first switch 17. In response to the first switch 17 being manually manipulated (for example, pressed down), the display 16 lights up in a mode corresponding to the battery remaining energy.

As shown in FIG. 3, the battery pack 10 includes a printed wiring board (hereinafter referred to as "circuit board") 101 and the battery 5. FIG. 3 shows the battery pack 10 with the upper case 2 removed. The circuit board 101 is housed in the upper case 2. The battery 5 is mainly housed in the lower case 3. The circuit board 101 is situated on an upper portion of the battery 5. The circuit board 101 has a shape of a substantially rectangular plate. As mentioned later, electronic components are mounted on the circuit board 101.

### (2-1-2) Configuration of Circuit Board

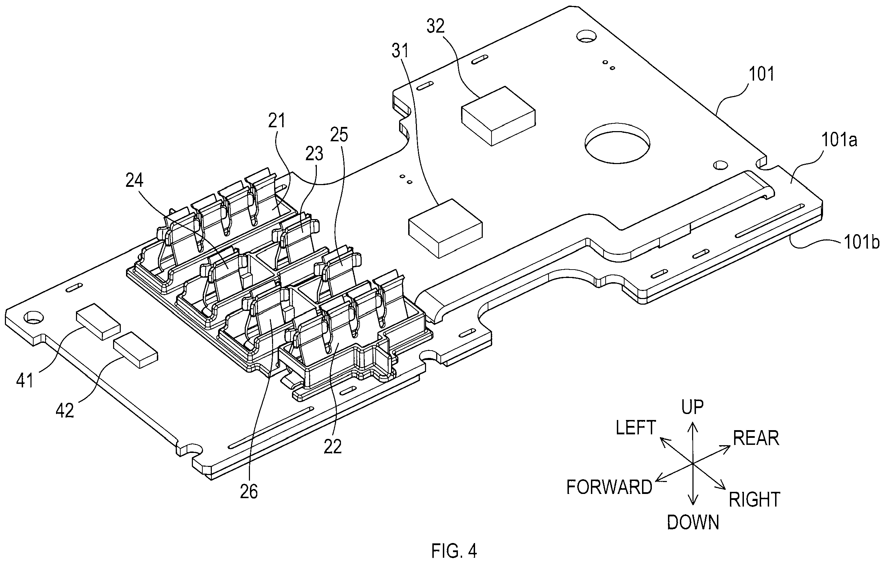

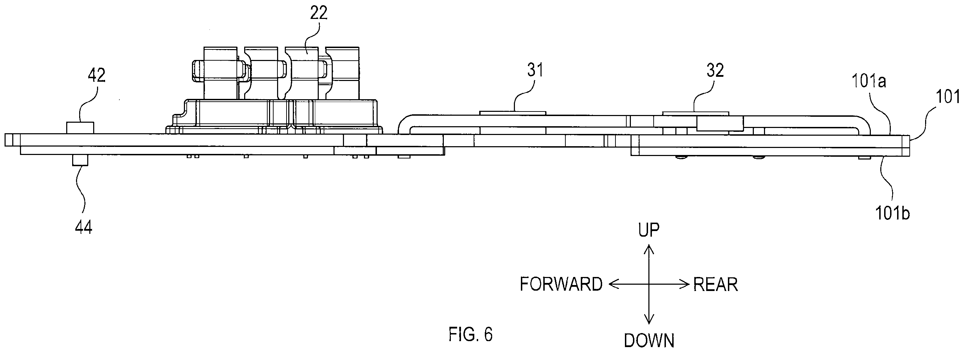

As shown in FIG. 3 to FIG. 6, the circuit board 101 includes a first surface (or a front surface) 101a and a second surface (or a back surface) 101b. The first surface 101a faces the upper case 2. The second surface 101b faces the battery 5.

The circuit board 101 includes a positive-electrode terminal 21 and a negative-electrode terminal 22. The positive-electrode terminal 21 and the negative-electrode terminal 22 are conductors (for example, metal). The positive-electrode terminal 21 is mounted at a first position on the first surface 101a corresponding to the first insertion opening 11. The negative-electrode terminal 22 is mounted at a second position on the first surface 101a corresponding to the second insertion opening 12.

In response to the device positive terminal 201 or the charger positive terminal being inserted into the first insertion opening 11, the device positive terminal 201 or the charger positive terminal is mechanically and electrically coupled to the positive-electrode terminal 21. In response to the device negative terminal 202 or the charger negative terminal being inserted into the second insertion opening 12, the device negative terminal 202 or the charger negative terminal is mechanically and electrically coupled to the negative-electrode terminal 22.

The circuit board 101 includes a CS terminal 23. The CS terminal 23 is a conductor (for example, metal). The CS terminal 23 is mounted at a third position on the first surface 101a corresponding to the third insertion opening 13. In response to the charger CS terminal being inserted into the third insertion opening 13, the charger CS terminal is mechanically and electrically coupled to the CS terminal 23.

The battery pack 10 is configured to output a charge enabling signal or a charge prohibition signal to the battery charger via the CS terminal 23. The charge enabling signal allows the battery charger to charge the battery 5. The charge prohibition signal prohibits the battery charger from charging the battery 5.

The circuit board 101 includes a DT terminal (or a first communication terminal) 24. The DT terminal 24 is a conductor (for example, metal). The DT terminal 24 is mounted at a fourth position on the first surface 101a. The fourth position corresponds to the third insertion opening 13 and is different from the third position. The DT terminal 24 is located anterior to the CS terminal 23 and is away from the CS terminal 23. In response to the device DT terminal 204 being inserted into the third insertion opening 13, the device DT terminal 204 is mechanically and electrically coupled to the DT terminal 24. In response to the charger DT terminal being inserted into the third insertion opening 13, the charger DT terminal is mechanically and electrically coupled to the DT terminal 24.

The battery pack 10 is configured to receive a switch signal (or an actuation switch signal) from the electric work machine 200 via the DT terminal 24. The switch signal shows whether a manual switch (or an actuation switch) 213 (see FIG. 9) of the electric work machine 200 is turned on (for example, manually moved). The battery pack 10 is configured to output a connection signal via the DT terminal 24. The electric work machine 200 and the battery charger can identify that the battery pack 10 is connected based on the connection signal from the battery pack 10.

The circuit board 101 includes a TR terminal (or serial communication terminal) 25. The TR terminal 25 is a conductor (for example, metal). The TR terminal 25 is mounted at a fifth position on the first surface 101a corresponding to the fourth insertion opening 14. In response to the device TR terminal 205 being inserted into the fourth insertion opening 14, the device TR terminal 205 is mechanically and electrically coupled to the TR terminal 25. In response to the charger TR terminal being inserted into the fourth insertion opening 14, the charger TR terminal is mechanically and electrically coupled to the TR terminal 25.

The battery pack 10 is configured to perform serial communication with the electric work machine 200 or the battery charger via the TR terminal 25.

The circuit board 101 includes a DS terminal (or a second communication terminal) 26. The DS terminal 26 is a conductor (for example, metal). The DS terminal 26 is mounted at a sixth position on the first surface 101a. The sixth position corresponds to the fourth insertion opening 14 and is different from the fifth position. The DS terminal 26 is located anterior to the TR terminal 25 and is away from the TR terminal 25. In response to the device DS terminal 206 being inserted into the fourth insertion opening 14, the device DS terminal 206 is mechanically and electrically coupled to the DS terminal 26. In response to the charger DS terminal being inserted into the fourth insertion opening 14, the charger DS terminal is mechanically and electrically coupled to the DS terminal 26.

The battery pack 10 is configured to output a discharge enabling signal or a discharge prohibition signal to the electric work machine 200 via the DS terminal 26. The discharge enabling signal allows operation of the electric work machine 200. The discharge prohibition signal prohibits operation of the electric work machine 200. The battery pack 10 receives an auxiliary voltage WK from the battery charger via the DS terminal 26.

The circuit board 101 includes a control circuit 31. The control circuit 31 is mounted on the first surface 101a. The control circuit 31 includes a CPU, a memory, I/O, and various peripheral circuits (for example, an analog/digital converter). The memory includes a semiconductor memory such as a ROM, a RAM, and a flash memory. The control circuit 31 executes various controls within the battery pack 10 including controlling of charging and discharging of the battery 5. The control circuit 31 of the present embodiment is in a form of a Micro Processing Unit (MPU).

The circuit board 101 includes an Analog Front End (hereinafter abbreviated as "AFE") 32. The AFE 32 is mounted on the first surface 101a. The AFE 32 is an analog circuit.

The circuit board 101 includes a first protection circuit 41 and a second protection circuit 42. The first protection circuit 41 and the second protection circuit 42 forcibly stop discharging of the battery 5 in a case where a given abnormality occurs in the battery pack 10. The given abnormality includes a state where discharging of the battery 5 should be stopped. One of the first protection circuit 41 or the second protection circuit 42 may be omitted.

The first protection circuit 41 and the second protection circuit 42 are on the first surface 101a at a given distance apart from each other. Each of the first protection circuit 41 and the second protection circuit 42 is in a form of a Surface-Mount Device (SMD) in the present embodiment. However, the first protection circuit 41 and the second protection circuit 42 may be in a form different from the SMD.

The first protection circuit 41 includes a package. Various electronic components and wirings included in the first protection circuit 41 are enclosed in the package. The package includes resin or ceramic, for example. The package is in a shape of a substantially rectangular parallelepiped, for example. At least a part of the first protection circuit 41 contacts the first surface 101a. The first protection circuit 41 includes a first facing surface that faces the first surface 101a. A part of or all of the first facing surface may be in contact with the first surface 101a.

The second protection circuit 42 has a shape similar to the first protection circuit 41 and is mounted similarly to the first protection circuit 41.

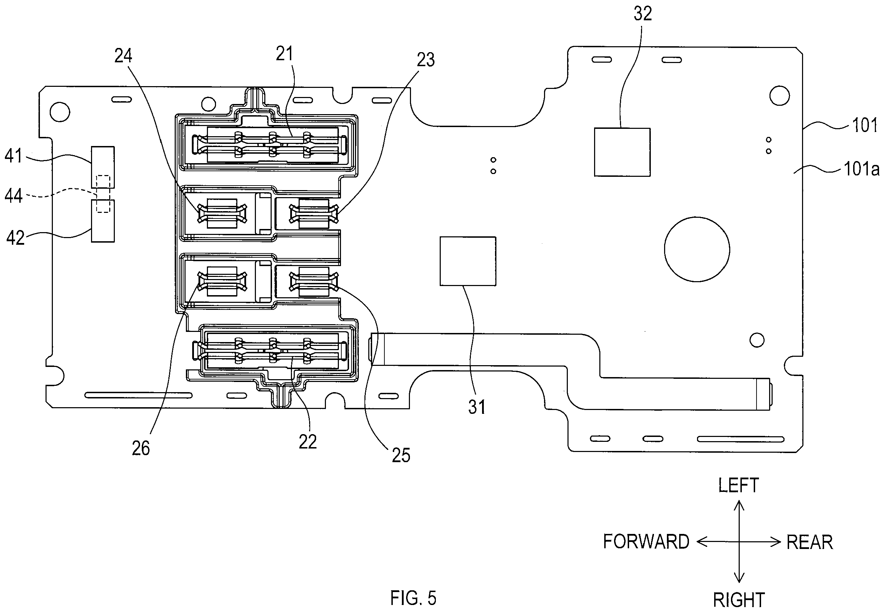

As shown in FIG. 5 to FIG. 7, the circuit board 101 includes a temperature detector 44. The temperature detector 44 is mounted on the second surface 101b. The temperature detector 44 in the present embodiment is in a form of an SMD. Alternatively, the temperature detector 44 may be in a form different from an SMD. The temperature detector 44 may include, for example, a thermosensitive device (such as a thermistor head) and lead wires coupled to the thermosensitive device.

The temperature detector 44 detects temperature of a first and second protection circuits 41, 42, more specifically, temperature of two first fuses 41a, 41b and two second fuses 42a, 42b, which will be explained later in detail, as a whole (hereinafter referred to as "fuse temperature"). The temperature detector 44 includes a thermosensitive device that can detect temperature. In the present embodiment, the temperature detector 44 includes a thermistor.

A region on the first surface 101a in which the first protection circuit 41 is mounted is called a first mount region. The first mount region may be a region facing the first protection circuit 41, for example. The first mount region may be a region of the first protection circuit 41 projected on the first surface 101a when the first protection circuit 41 is vertically projected on the first surface 101a, for example.

A region on the first surface 101a in which the second protection circuit 42 is mounted is called a second mount region. The second mount region may be a region facing the second protection circuit 42, for example. The second mount region may be a region of the second protection circuit 42 projected on the first surface 101a when the second protection circuit 42 is vertically projected on the first surface 101a, for example.

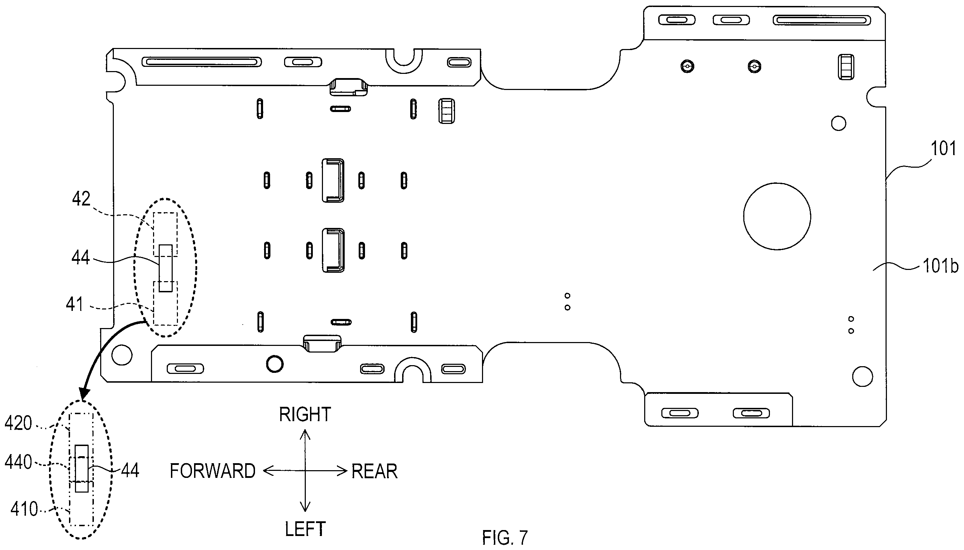

A first region 410, a second region 420, and a middle region 440 are defined on the second surface 101b as shown in FIG. 7.

The first region 410 exactly corresponds to the back of the first mount region. In other words, in directions perpendicular to the circuit board 101 (or up-down directions), the first region 410 exactly overlaps (or matches) with the first mount region.

The second region 420 exactly corresponds to the back of the second mount region. In other words, in directions perpendicular to the circuit board 101, the second region 420 exactly overlaps (or matches) with the second mount region.

The middle region 440 is a region between the first region 410 and the second region 420. More precisely, the middle region 440 may be defined as a region where a specific line segment may be present, for example. The specific line segment corresponds to a line segment that connects any first point in the first region 410 with any second point in the second region 420. The middle region 440 may be defined as any region as long as it can be identified as a region between the first region 410 and the second region 420. For example, the middle region 440 may be a region between the first region 410 and the second region 420 within a region surrounded by a circumscribed rectangle circumscribed to the first region 410 and the second region 420.

In the present embodiment, as shown in FIG. 5 to FIG. 7, the temperature detector 44 is in the middle region 440. The temperature detector 44 is also in the first region 410 and in the second region 420. In other words, the temperature detector 44 of the present embodiment at least partially overlap with each of the first protection circuit 41 and the second protection circuit 42 in perpendicular directions.

### (2-1-3) Electrical Configuration of Battery Pack

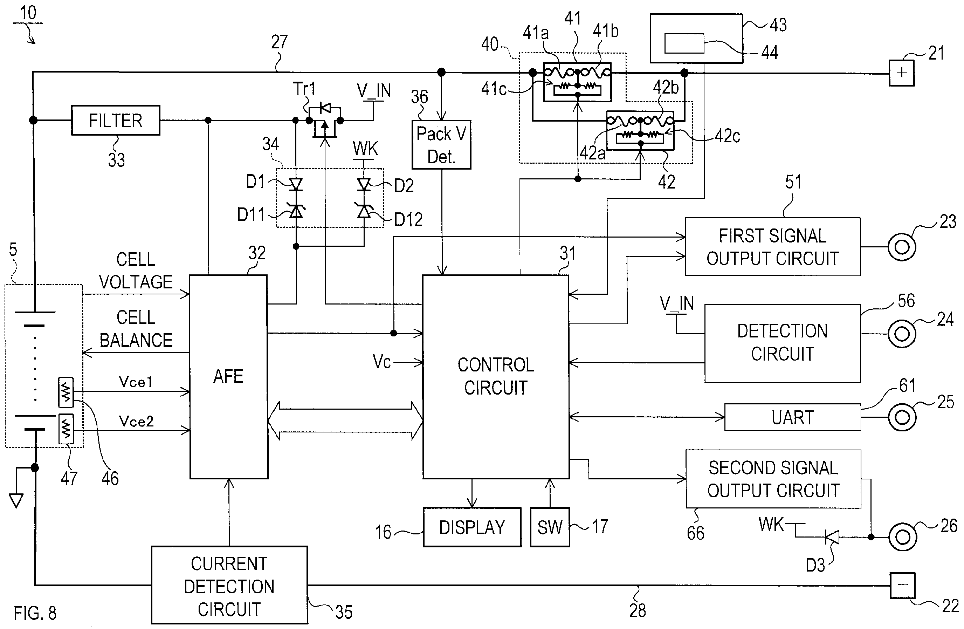

Electrical configuration of the battery pack 10 will be explained with reference to FIG. 8. As mentioned above, the battery pack 10 of the present embodiment includes the battery 5, the positive-electrode terminal 21, the negative-electrode terminal 22, the CS terminal 23, the DT terminal 24, the TR terminal 25, the DS terminal 26, the control circuit 31, the AFE 32, the display 16, and the first switch 17. The display 16 and the first switch 17 are coupled to the control circuit 31.

The battery pack 10 includes a temperature detection circuit 43. The temperature detection circuit 43 includes the temperature detector 44. The temperature detection circuit 43 is coupled to the control circuit 31. The temperature detection circuit 43 outputs a fuse temperature signal to the control circuit 31. The fuse temperature signal indicates the fuse temperature detected by the temperature detector 44.

The battery pack 10 includes a positive electrode path 27 and a negative electrode path 28. The positive electrode path 27 electrically couples the positive-electrode terminal 21 to a positive electrode of the battery 5. The negative electrode path 28 electrically couples the negative-electrode terminal 22 to a negative electrode of the battery 5.

The battery pack 10 includes a current detection circuit 35. The current detection circuit 35 is on the negative electrode path 28 and outputs a current detection signal corresponding to the magnitude of battery current that flows through the negative electrode path 28. The battery current includes a discharge current or a charge current. The current detection circuit 35 of the present embodiment includes a resistor (not shown) on the negative electrode path 28. A voltage between both ends of this resistor varies depending on the magnitude of the battery current. The current detection signal indicates the magnitude of the voltage between both ends of the resistor. The current detection signal is inputted to the AFE 32.

The battery pack 10 includes a first thermistor 46 and a second thermistor 47. For example, the first thermistor 46 and the second thermistor 47 are disposed near the battery 5 and detect a temperature of the battery 5. Each of the first thermistor 46 and the second thermistor 47 may be in contact with one of cells. The first thermistor 46 outputs a first cell temperature signal Vce1 to the AFE 32. The first cell temperature signal Vce1 indicates a first battery temperature. The first battery temperature corresponds to the temperature detected by the first thermistor 46. The second thermistor 47 outputs second cell temperature signal Vce2 to the AFE 32. The second cell temperature signal Vce2 indicates a second battery temperature. The second battery temperature corresponds to the temperature detected by the second thermistor 47.

The AFE 32 can communicate with the control circuit 31. The AFE 32 detects the magnitude of a voltage of each of the cells (hereinafter referred to as "cell voltage") in accordance with a command from the control circuit 31. The AFE 32 executes a cell balancing process based on the magnitude of each cell voltage. The cell balancing process equalize the remaining energy of the cells. The AFE 32 detects the temperature of the battery 5 based on the first cell temperature signal Vce 1 and the second cell temperature signal Vce2. The AFE 32 detects the magnitude of the battery current based on the current detection signal. The AFE 32 converts each of the magnitude of each cell voltage, the temperature of the battery 5, and the magnitude of the battery current to a digital signal, and outputs each of thus converted digital signal to the control circuit 31.

Based on the magnitude of each cell voltage, the temperature of the battery 5, and the magnitude of the battery current, the AFE 32 determines whether charging of the battery 5 should be allowed or prohibited. In a case where it is determined to allow charging, the AFE 32 outputs a first charge enabling signal to the control circuit 31 and a first signal output circuit 51. In a case where it is determined to prohibit charging, the AFE 32 outputs a first charge prohibition signal to the control circuit 31 and the first signal output circuit 51.

The battery pack 10 includes a filter 33. A first end of the filter 33 is coupled to the positive electrode of the battery 5. A second end of the filter 33 is coupled to the AFE 32. The filter 33 functions as a so-called low-pass filter. The filter 33 removes harmonics from voltage of the battery 5 (hereinafter referred to as "battery voltage"). The filter 33 outputs the battery voltage with the harmonics removed. The AFE 32 receives the battery voltage from the filter 33.

The battery pack 10 includes a battery voltage detection circuit 36. The battery voltage detection circuit 36 detects the magnitude of the battery voltage and outputs a voltage detection signal to the control circuit 31. The voltage detection signal indicates the detected magnitude of the battery voltage.

The battery pack 10 includes an activation circuit 34. The activation circuit 34 includes a first diode D1, a first Zener diode D11, a second diode D2, and a second Zener diode D12. The first diode D1 includes an anode that is coupled to the second end of the filter 33. The first diode D1 includes a cathode that is coupled to a cathode of the first Zener diode D11. The first Zener diode D11 includes an anode coupled to the AFE 32. The second diode D2 includes an anode coupled to a cathode of a third diode D3, which will be explained later. The second diode D2 includes a cathode that is coupled to a cathode of the second Zener diode D12. The second Zener diode D12 includes an anode that is coupled to the AFE 32.

The anode of the first diode D1 receives the battery voltage from the filter 33. The anode of the second diode D2 receives the auxiliary voltage WK from the battery charger. More specifically, in the present embodiment, the auxiliary voltage WK is inputted to the activation circuit 34 from the DS terminal 26 via the third diode D3.

The activation circuit 34 receives the battery voltage and/or the auxiliary voltage WK. The activation circuit 34 outputs the battery voltage or the auxiliary voltage WK to the AFE 32 as a power supply activation signal. Specifically, in a case where the battery voltage whose magnitude is greater than or equal to a specified voltage value is inputted to the activation circuit 34, this battery voltage is outputted to the AFE 32 as the power supply activation signal via the first diode D1 and the first Zener diode D11. The battery voltage greater than or equal to the specified voltage value corresponds to the voltage at which the first Zener diode D11 can break down. In a case where the auxiliary voltage WK is inputted to the activation circuit 34, this auxiliary voltage WK is outputted to the AFE 32 as the power supply activation signal via the second diode D2 and the second Zener diode D12.

The battery pack 10 includes a power-supply circuit (not shown). The power-supply circuit generates direct-current power-supply voltage Vc. The power-supply voltage Vc causes each part of the battery pack 10 to operate. In the present embodiment, the power-supply circuit is installed inside the AFE 32.

The AFE 32 includes a voltage input port. The voltage input port receives the battery voltage from the filter 33. In the AFE 32, the battery voltage is inputted to the power-supply circuit. Although it is not shown in the drawings, the voltage input port is also coupled to an auxiliary voltage line. The auxiliary voltage line is supplied with the auxiliary voltage WK. Accordingly, the power-supply circuit receives the battery voltage or the auxiliary voltage WK via the voltage input port. The AFE 32 receives the power supply activation signal. If the power-supply circuit receives the power supply activation signal while the power-supply circuit is stopping its operation, the power-supply circuit generates the power-supply voltage Vc from the battery voltage or the auxiliary voltage WK. The power-supply voltage Vc is outputted from the AFE 32 and supplied to each part in the battery pack 10 including the control circuit 31.

In the present embodiment, the control circuit 31 monitors the battery voltage based on the voltage detection signal from the battery voltage detection circuit 36. In a case where the magnitude of the battery voltage is less than a specified over discharge threshold value, the control circuit 31 outputs a shutdown command to the AFE 32. The AFE 32 stops the operation of the power-supply circuit based on receiving of the shutdown command. This stops generation of the power-supply voltage Vc and causes the control circuit 31 to shutdown (in other words, to completely stop the operation).

If the control circuit 31 is shut down and the magnitude of the battery voltage is less than the specified voltage value, the power supply activation signal based on the battery voltage is not inputted to the power-supply circuit. In this case, shutdown state is maintained. Meanwhile, if the battery pack 10 is coupled to the battery charger and the auxiliary voltage WK is inputted from the battery charger during the shutdown of the control circuit 31, the auxiliary voltage WK and the power supply activation signal based on this auxiliary voltage WK is inputted to the power-supply circuit. This generates the power-supply voltage Vc in the power-supply circuit and causes the control circuit 31 to activate. The battery 5 may be charged with a power supply different from a regular battery charger. In this case, the auxiliary voltage WK is not inputted to the battery pack 10. In this case, if the magnitude of the battery voltage recovers to be greater than or equal to the specified voltage value, the power supply activation signal based on this battery voltage is inputted to the AFE 32. This generates the power-supply voltage Vc and activates the control circuit 31. After the activation, the control circuit 31 monitors the battery 5 and controls the charging of the battery 5 so that the battery 5 does not go into the state of overcharging.

The battery pack 10 includes a second switch Tr1. The second switch Tr1 is in a form of a P-channel type metal oxide semiconductor field-effect transistor (MOSFET) in the present embodiment. The second switch Tr1 includes a source coupled to the second end of the filter 33. The second switch Tr1 includes a drain coupled to a detection circuit 56, which will be explained later. The second switch Tr1 includes a gate coupled to the control circuit 31.

Usually, the control circuit 31 turns on the second switch Tr1. In response to the second switch Tr1 being turned on, the battery voltage is outputted from the drain of the second switch Tr1 via the filter 33 and the second switch Tr1. This battery voltage outputted from the drain is called a "notification voltage V_IN". The notification voltage V_IN is used to notify the electric work machine 200 and the battery charger that the battery pack 10 is connected. The control circuit 31 turns off the second switch Tr1 when outputting the shut-down command. In this case, the control circuit 31 turns on the second switch Tr1 again when the shutdown is cancelled.

The control circuit 31 determines a pack state based on the various input signals. The pack state corresponds to the state of the battery pack 10 (mainly the state of the battery 5). The pack state includes, for example, magnitude of the discharge current, magnitude of the charge current, magnitude of the battery voltage, and the state of the battery 5 (for example, voltage of each cell, and temperature of the battery 5) represented by various information from the AFE 32 (various signals and/or data), and the fuse temperature.

The control circuit 31 determines whether to allow or prohibit charging of the battery 5 based on the pack state. In a case where the control circuit 31 allows charging of the battery 5, the control circuit 31 outputs a second charge enabling signal to the first signal output circuit 51. In a case where the control circuit 31 prohibits charging of the battery 5, the control circuit 31 outputs a second charge prohibition signal to the first signal output circuit 51.

The control circuit 31 determines whether to allow or prohibit discharging of the battery 5 based on the pack state. In the present embodiment, one of the requirements for allowing discharging is that an actuation switch 213 is turned on. In a case where the control circuit 31 allows discharging, the control circuit 31 outputs a discharge enabling command to a second signal output circuit 66, which will be explained later. In a case where the control circuit 31 prohibits discharging, the control circuit 31 outputs a discharge prohibition command to the second signal output circuit 66.

The battery pack 10 includes the first signal output circuit 51. The first signal output circuit 51 is coupled to the CS terminal 23. The first signal output circuit 51 receives the first charge enabling signal or the first charge prohibition signal from the AFE 32 and also receives the second charge enabling signal or the second charge prohibition signal from the control circuit 31. In a case where the first signal output circuit 51 is receiving the first charge enabling signal and the second charge enabling signal, the first signal output circuit 51 outputs the charge enabling signal to the battery charger via the CS terminal 23. In a case where the first signal output circuit 51 is receiving the first charge prohibition signal or the second charge prohibition signal, the first signal output circuit 51 outputs the charge prohibition signal to the battery charger via the CS terminal 23.

In a case where the battery charger receives the charge enabling signal from the battery pack 10, the battery charger supplies the battery pack 10 with the charge current to charge the battery 5. In a case where the battery charger receives the charge prohibition signal from the battery pack 10, the battery charger does not supply the battery pack 10 with the charge current.

The battery pack 10 includes the detection circuit 56. The detection circuit 56 is coupled to the DT terminal 24.

The detection circuit 56 detects whether the battery pack 10 is coupled to the electric work machine 200 or the battery charger based on a signal inputted from the DT terminal 24. The detection circuit 56 notifies the control circuit 31 of the result of the detection.

The detection circuit 56 receives the switch signal from the electric work machine 200 via the DT terminal 24. The detection circuit 56 detects whether the manual switch 213 is turned on based on the switch signal. The detection circuit 56 notifies the control circuit 31 of the result of the detection.

The detection circuit 56 receives the notification voltage V_IN. In a case where the detection circuit 56 receives (or is receiving) the notification voltage V_IN, the detection circuit 56 outputs the connection signal via the DT terminal 24. In a case where the detection circuit 56 does not receive the notification voltage V_IN, the detection circuit 56 does not output the connection signal.

The battery pack 10 includes a communication circuit 61. The communication circuit 61 is coupled to the TR terminal 25. The communication circuit 61 performs serial communication with the electric work machine 200 or the battery charger via the TR terminal 25. The communication circuit 61 may be configured to perform data communication based on the communication standard of Universal Asynchronous Receiver/Transmitter (UART), for example. The control circuit 31 transmits various data as necessary via the communication circuit 61. In response to receiving data from the electric work machine 200 or the battery charger, the communication circuit 61 outputs the received data to the control circuit 31.

The battery pack 10 includes the second signal output circuit 66 and the third diode D3. The second signal output circuit 66 and the third diode D3 are coupled to the DS terminal 26. As mentioned above, the third diode D3 receives the auxiliary voltage WK from the battery charger and outputs the auxiliary voltage WK to the activation circuit 34.

In response to receiving the discharge enabling command from the control circuit 31, the second signal output circuit 66 outputs the discharge enabling signal to the electric work machine 200 via the DS terminal 26. In response to receiving the discharge prohibition command from the control circuit 31, the second signal output circuit 66 outputs the discharge prohibition signal to the electric work machine 200 via the DS terminal 26.

In a case where the electric work machine 200 receives (or is receiving) the discharge enabling signal from the battery pack 10, the electric work machine 200 operates by a battery power from the battery pack 10. In a case where the electric work machine 200 receives the discharge prohibition signal from the battery pack 10, the electric work machine 200 stops (or reduces) consumption of the battery power. This stops (or reduces) the discharge from the battery 5 to the electric work machine 200.

In a case where a charge-unstoppable abnormality or a discharge-unstoppable abnormality occurs, the control circuit 31 outputs a protection signal to a protector 40. The charge-unstoppable abnormality corresponds to a state where the charge current does not stop despite an output of the second charge prohibition signal. The discharge-unstoppable abnormality corresponds to a state where the discharge current does not stop despite an output of the discharge prohibition command. The protection signal forcibly stops (or reduces) charging or discharging of the battery 5.

The protector 40 is on the positive electrode path 27 and completes (or connects) or interrupts (or disconnects) the positive electrode path 27. The protector 40 usually completes the positive electrode path 27. The battery current flows via the protector 40. Meanwhile, in a case where the given abnormality occurs, the protector 40 interrupts the positive electrode path 27. In the present embodiment, the given abnormality includes (i) a state where the magnitude of the battery current reaches a given abnormality level, or (ii) a state where the protection signal is inputted from the control circuit 31. The abnormality level is a level that does not occur or does not likely to occur in an ordinary use. The battery current at the abnormality level may occur when, for example, both of the positive-electrode terminal 21 and the negative-electrode terminal 22 short-circuit each other, or both of the positive-electrode terminal 21 and the negative-electrode terminal 22 are in a state close to short-circuiting each other.

The protector 40 includes the first protection circuit 41 and the second protection circuit 42. In the present embodiment, the first protection circuit 41 and the second protection circuit 42 are coupled in parallel to each other and on the positive electrode path 27.

A first end of the first protection circuit 41 and a first end of the second protection circuit 42 are coupled to a positive electrode of the battery 5 via a part of the positive electrode path 27. A second end of the first protection circuit 41 and a second end of the second protection circuit 42 are coupled to the positive-electrode terminal 21 via another part of the positive electrode path 27.

The first protection circuit 41 includes a first fuse 41a and a first fuse 41b coupled in series to each other. A first end of the first fuse 41a electrically corresponds to the first end of the first protection circuit 41. A second end of the first fuse 41a is coupled to a first end of the first fuse 41b. A second end of the first fuse 41b electrically corresponds to the second end of the first protection circuit 41.

Based on the discharge current or the charge current reached or having reached the abnormality level, the first fuses 41a, 41b melt themselves by Joule heat generated by the discharge current or the charge current. Consequently, the positive electrode path 27 is mechanically and electrically interrupted which results in generating a state where discharging and charging of the battery 5 is impossible. In the present embodiment, the discharge current and the charge current are each divided into half which respectively flow to the first protection circuit 41 and the second protection circuit 42 in the protector 40. Thus, more specifically, the first fuses 41a, 41b melt themselves by the discharge current or the charge current that has been divided and has flown into the first protection circuit 41.

The first protection circuit 41 includes a first heater 41c. The first heater 41c is coupled to the second end of the first fuse 41a and a protection signal output port (not shown) of the control circuit 31. The protection signal output port outputs the protection signal.

The first heater 41c of the present embodiment includes two first resistors that are coupled in parallel to each other. First ends of the two first resistors are each coupled to the second end of the first fuse 41a. Second ends of the two first resistors are coupled to the protection signal output port of the control circuit 31.

Based on the protection signal inputted from the control circuit 31 to the first protection circuit 41, an electric current flows through the first heater 41c, and the first heater 41c generates heat (in other words, the two first resistors generate heat). In the present embodiment, the protection signal is a low level signal, for example. In other words, in the present embodiment, output of the protection signal means that the electric potential of the protection signal output port is set at the ground or near the ground. Consequently, when the protection signal is outputted, the discharge current flows from the battery 5 to the first heater 41c via the first fuse 41a, or alternatively, the charge current flows from the positive-electrode terminal 21 to the first heater 41c via the first fuse 41b. This causes the first heater 41c to generate heat. At this time, a heating value of the first heater 41c has a level capable of melting the first fuses 41a, 41b. Thus, the first fuses 41a, 41b melt by the heat from the first heater 41c, which interrupts the positive electrode path 27.

In the present embodiment, the second protection circuit 42 is configured similarly to the first protection circuit 41 and thus operates similarly to the first protection circuit 41. In other words, the second protection circuit 42 includes a second fuse 42a and a second fuse 42b that are coupled in series to each other. A first end of the second fuse 42a electrically corresponds to the first end of the second protection circuit 42. A second end of the second fuse 42a is coupled to the first end of the second fuse 42b. A second end of the second fuse 42b electrically corresponds to the second end of the second protection circuit 42. The second fuse 42a and the second fuse 42b function similarly to the first fuse 41a and the first fuse 41b of the first protection circuit 41.

The second protection circuit 42 includes a second heater 42c. The second heater 42c includes two second resistors that are coupled in parallel to each other. First ends of the two second resistors are coupled to the second end of the second fuse 42a. Second ends of the two second resistors are coupled to the protection signal output port. The second heater 42c functions similarly to the first heater 41c.

Therefore, based on (i) the discharge current or the charge current reaching the abnormality level, or (ii) the control circuit 31 outputting the protection signal, the first fuses 41a, 41b and the second fuses 42a, 42a melt, and thereby the positive electrode path 27 is interrupted.

The control circuit 31 receives the fuse temperature signal from the temperature detection circuit 43. The control circuit 31 obtains the fuse temperature based on the fuse temperature signal. If the fuse temperature satisfies the discharge inhibition requirement when discharging from the battery 5 to the electric work machine 200 is performed, the control circuit 31 executes a discharge inhibition process. The discharge inhibition requirement is required to inhibit or stop discharging from the battery 5. Satisfaction of the discharge inhibition requirement corresponds to a condition that the fuse temperature is at a level where further increase of the fuse temperature should be inhibited. In the present embodiment, the discharge inhibition requirement includes the fuse temperature reached or having reached a first temperature threshold. In other words, the discharge inhibition requirement is satisfied based on a condition that the fuse temperature reached or has reached the first temperature threshold.

The main object of the discharge inhibition process is to inhibit further increase in the fuse temperature. The discharge inhibition process may be any process that can inhibit an increase in the fuse temperature. The discharge inhibition process of the present embodiment includes outputting the discharge prohibition signal to the electric work machine 200 to thereby stop the consumption of the battery power in the electric work machine 200 (and to stop the discharge current).

More specifically, in the discharge inhibition process, the control circuit 31 outputs the discharge prohibition command to the second signal output circuit 66. Based on receiving of the discharge prohibition command, the second signal output circuit 66 outputs the discharge prohibition signal to the electric work machine 200. Based on receiving of the discharge prohibition signal from the battery pack 10, the electric work machine 200 stops the consumption of the battery power. If a inhibition cancel requirement is satisfied after the fuse temperature reached the first temperature threshold, the control circuit 31 stops the discharge inhibition process. More specifically, the control circuit 31 stops outputting the discharge prohibition command. In response to the output of the discharge prohibition command being stopped, the output of the discharge prohibition signal is stopped. The inhibition cancel requirement is satisfied based on conditions that (i) the fuse temperature has decreased to a second temperature threshold or less and (ii) the manual switch 213 of the electric work machine 200 is turned off. In response to the manual switch 213 being turned on after the output of the discharge prohibition command is stopped, the control circuit 31 outputs the discharge enabling command unless discharging should be prohibited.

The first temperature threshold is set at a temperature lower than a melting threshold. The melting threshold corresponds to the lowest temperature at which the first fuses 41a, 41b and the second fuses 42a, 42b can melt. Accordingly, the first fuse 41a does not melt (or is not likely to melt) even if the temperature of the first fuse 41a reaches the first temperature threshold. The same can be said for the first fuse 41b and the second fuses 42a, 42b. The first temperature threshold is set such that discharging is stopped before the first fuses 41a, 41b and the second fuses 42a, 42b melt. More specifically, the first temperature threshold may be set based on specifications (for example, rated current) of the first fuses 41a, 41b and the second fuses 42a, 42b. The second temperature threshold is lower than the first temperature threshold. However, the second temperature threshold may be the same as the first temperature threshold.

The discharge inhibition process may be any process that can inhibit (or reduce) or stop the discharge current. The discharge inhibition process may include, for example, outputting an inhibition command to the electric work machine 200. More specifically, the control circuit 31 may output the inhibition command to the communication circuit 61, for example. In this case, based on receiving of the inhibition command from the control circuit 31, the communication circuit 61 transmits the inhibition command to the electric work machine 200 via the TR terminal 25. Based on receiving of the inhibition command from the battery pack 10, the electric work machine 200 reduces or stops the discharge current from the battery 5 to the electric work machine 200.

The inhibition command may include upper limit information indicating an upper limit value of the discharge current. In this case, the electric work machine 200 may control the amount of consumption of the battery power so that the magnitude of the discharge current is less than or equal to the upper limit value.

### (2-1-4) Configuration of Electric Work Machine

The outline of the configuration of the electric work machine 200 of the present embodiment will be explained with reference to FIG. 9. The electric work machine 200 includes the device positive terminal 201, the device negative terminal 202, the device DT terminal 204, the device TR terminal 205, and the device DS terminal 206.

The electric work machine 200 includes a motor 211. The motor 211 drives a driven tool (not shown) attached to the electric work machine 200. The driven tool is in a form that fits an intended use of the electric work machine 200. The driven tool may include a tool bit (for example, a driver bit, and a drill bit). The tool bit may be used in an operation to open a hole in a work piece and/or in an operation to tighten a screw to a work piece.

The electric work machine 200 includes the manual switch 213. The manual switch 213 is turned on by manually moved (for example, by being pulled) by a user of the electric work machine 200.

The electric work machine 200 includes a controller 212. The controller 212 is coupled to the device positive terminal 201 and the device negative terminal 202. The controller 212 receives the battery power from the battery pack 10. The controller 212 converts the battery power to a driving power. The driving power can drive the motor 211. The controller 212 supplies the driving power to the motor 211. The motor 211 receives the driving power and thereby be driven.

The controller 212 is coupled to the device DT terminal 204, the device TR terminal 205, and the device DS terminal 206. The controller 212 (i) detects whether the manual switch 213 is turned on and (ii) outputs a switch signal in accordance with the result of the detection via the device DT terminal 204. The controller 212 performs serial communication with the battery pack 10 via the device TR terminal 205. The controller 212 receives the discharge enabling signal or the discharge prohibition signal from the battery pack 10 via the device DS terminal 206.

Based on a condition that the discharge enabling signal is received and that the manual switch 213 is turned on, the controller 212 outputs the driving power to the motor 211 and thereby drives the motor 211. In a case where the discharge prohibition signal is received, the controller 212 does not output the driving power even if the manual switch 213 is turned on.

In a case where the controller 212 has received or is receiving the discharge prohibition signal, the consumption of the battery power by the controller 212 may be completely stopped. In a case where the electric work machine 200 has received or is receiving the discharge prohibition signal, the consumption of the battery power by the electric work machine 200 may be completely stopped.

Based on receiving of the inhibition command, the controller 212 may reduce or stop the consumption of the battery power. In a case where the inhibition command includes the upper limit value, the controller 212 may control the power consumption in the electric work machine 200 so that the magnitude of the discharge current does not exceed the upper limit value.

### (2-1-5) Example of Control of Control Circuit Depending on Fuse Temperature

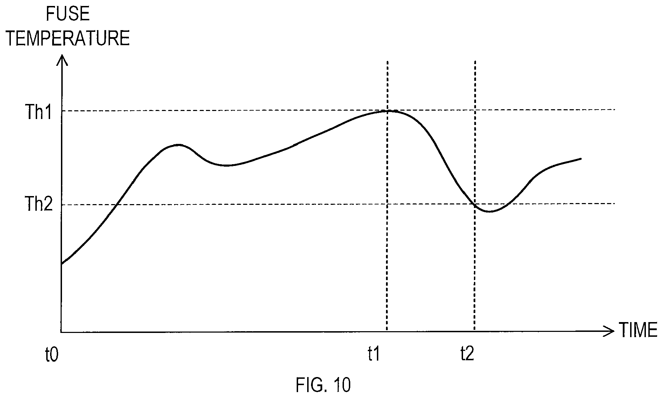

FIG. 10 shows an example of operation of the control circuit 31 when discharging from the battery pack 10 to the electric work machine 200 is performed.

At time t0, the discharge current has already been supplied from the battery pack 10 to the electric work machine 200, and thus the motor 211 has been driven. On or after the time t0, a load applied to the motor 211 increases, which causes the electric current flowing in the motor 211 to increase (in other words, the discharge current increases). This causes the fuse temperature to increase gradually.

At time t1, the fuse temperature reaches a first temperature threshold Th1. At time t1, the control circuit 31 outputs the discharge prohibition command based on the condition that the fuse temperature has reached the first temperature threshold Th1. This causes the controller 212 of the electric work machine 200 to stop electric power supply to the motor 211. At this time, the controller 212 may completely stop the consumption of the battery power. As a result of the operation of the electric work machine 200 as mentioned above, discharging from the battery 5 to the electric work machine 200 is stopped. This causes the fuse temperature to decrease.

At time t2, the fuse temperature decreases to a second temperature threshold Th2. At this time, if the manual switch 213 of the electric work machine 200 is turned off, the control circuit 31 stops the discharge prohibition command.

### (2-1-6) Fuse Temperature Monitoring Process

The operation of the control circuit 31 as mentioned above is achieved by the control circuit 31 (specifically, the CPU) executing a main process (not shown). A program of the main process is stored in the memory. The control circuit 31 executes the main process in accordance with the program.

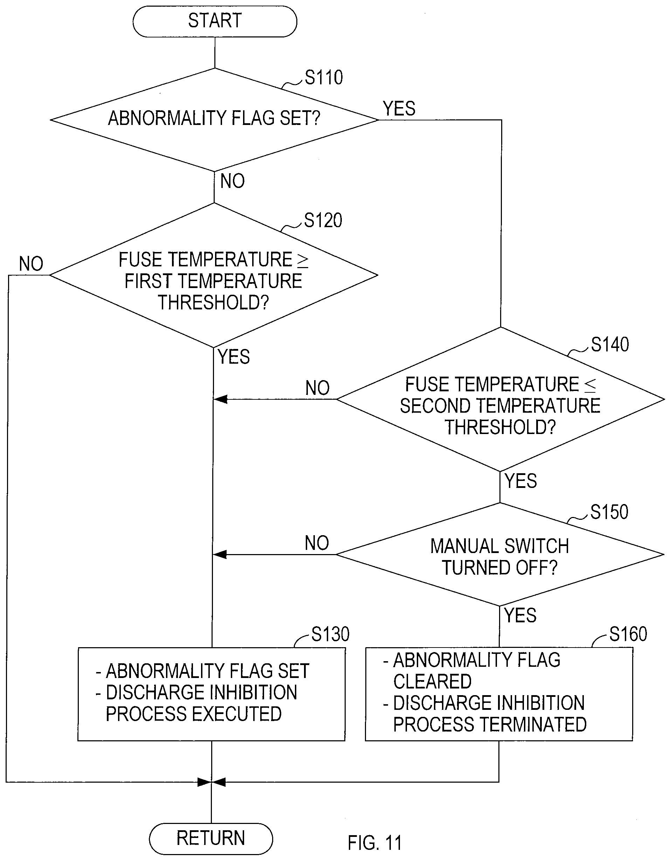

The main process includes a fuse temperature monitoring process shown in FIG. 11. The fuse temperature monitoring process is repeatedly executed at a given control cycle.

Once the fuse temperature monitoring process is initiated, the control circuit 31 determines at S110 whether an abnormality flag is set. The abnormality flag is set at S130. If the abnormality flag is not set, the process proceeds to S120.

In S120, the control circuit 31 determines whether the fuse temperature is greater than or equal to the first temperature threshold. If the fuse temperature is less than the first temperature threshold, the control circuit 31 terminates the fuse temperature monitoring process. If the fuse temperature is greater than or equal to the first temperature threshold, the process proceeds to S130.

In S130, the control circuit 31 sets the abnormality flag. The control circuit 31 also executes the discharge inhibition process. This inhibits or stops discharging from the battery 5. The abnormality flag indicates whether the discharge inhibition process is executed, in other words, whether the discharge inhibition process should be executed. After S130, the control circuit 31 ends the fuse temperature monitoring process.

If the abnormality flag is set in S110, the process proceeds to S140. In S140, the control circuit 31 determines whether the fuse temperature is less than or equal to the second temperature threshold. If the fuse temperature is greater than the second temperature threshold, the process proceeds to S130. In this case, the abnormality flag is continued to be set and the discharge inhibition process is also continued. If the fuse temperature is less than or equal to the second temperature threshold, the process proceeds to S150.

In S150, the control circuit 31 determines whether the manual switch 213 is turned off. If the manual switch 213 is turned on, the process proceeds to S130. If the manual switch 213 is turned off, the process proceeds to S160.

In S160, the control circuit 31 clears the abnormality flag. The control circuit 31 also stops the discharge inhibition process. Therefore, inhibition or stoppage of discharging based on the fuse temperature is cancelled.

### (2-1-7) Control of Display

The outline of control of the display 16 by the control circuit 31 will be explained. The control circuit 31 calculates the battery remaining energy. The battery remaining energy may be calculated in any manner. In the present embodiment, for example, the control circuit 31 adds up (or accumulates) (in other words cumulatively adds) values of electric current detected by the current detection circuit 35 to obtain a current integrated value. The control circuit 31 calculates the battery remaining energy based on the current integrated value.

More specifically, the control circuit 31 periodically learns (in other words, calculates) a full charge capacity of the battery 5. Hereinafter, thus learned full charge capacity will be called "FCC". The control circuit 31 calculates the battery remaining energy based on the FCC and the current integrated value currently calculated. The FCC can be calculated based on the current integrated value and the battery voltage, for example.

The control circuit 31 then compares the calculated FCC with a degradation malfunction threshold value FCC_CDI. If the FCC is less than or equal to the FCC_CDI, the control circuit 31 increases a count variable of a degradation detection counter by a given value, for example. The control circuit 31 may determine that the battery 5 is degraded (in other words, malfunctioning) based on the count variable having reached a specified value. The condition that the battery 5 is degraded may indicate that discharging from the battery 5 and/or charging of the battery 5 is impossible.

The control circuit 31 periodically repeats (i) calculation of the current integrated value, (ii) learning of the FCC based on thus obtained current calculation values, the battery voltage, and the like, and (iii) determination of degradation of the battery 5 based on the comparison between the FCC and the FCC CDI.

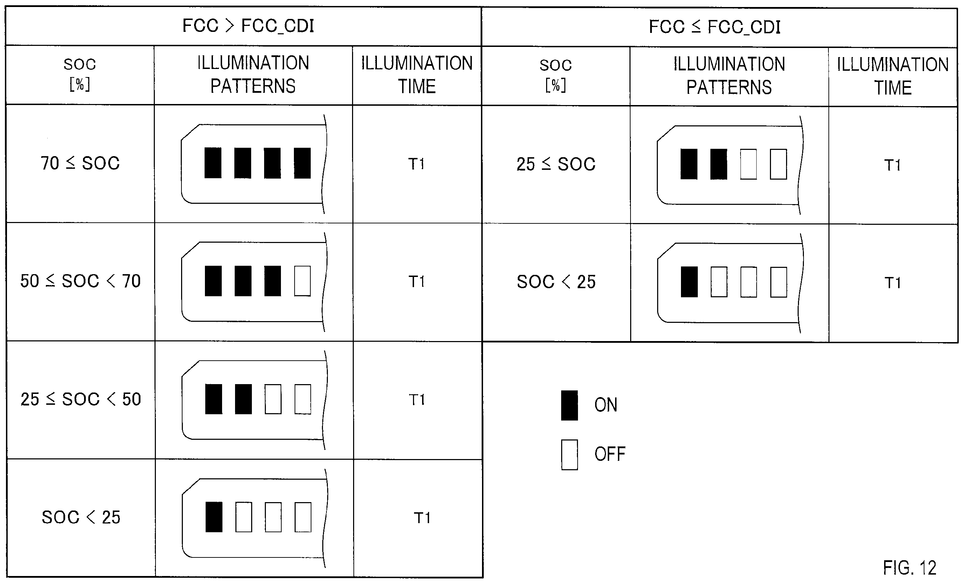

When the first switch 17 is manipulated, the control circuit 31 obtains the battery remaining energy currently calculated and causes the display 16 to illuminate in a manner corresponding to the battery remaining energy. FIG. 12 shows an example of lighting modes.

As shown in FIG. 12, if the battery 5 is in a normal state, the lighting mode of the display 16 changes in four different manners depending on State Of Charge (SOC) of the battery 5. The normal state corresponds to a state where the FCC is greater than the FCC_CDI. In other words, the normal state corresponds to a state where the battery 5 is not degraded or where the degradation of the battery 5 is mild. In other words, the normal state also corresponds to a state where it is not determined neither that the battery 5 is malfunctioning nor that the battery 5 is almost malfunctioning. The SOC is calculated based on the battery remaining energy. The SOC may be calculated by dividing the current battery remaining energy by the current FCC.

In the normal state, the display 16 illuminates in the following manner.
(i) When the SOC is greater than or equal to 70%, a first to a fourth LEDs 16a to 16d are illuminated.
(ii) When the SOC is greater than or equal to 50% and less than 70%, the first to a third LEDs 16a to 16c are illuminated.
(iii) When the SOC is greater than or equal to 25% and less than 50%, the first and a second LEDs 16a, 16b are illuminated.
(iv) When the SOC is less than 25%, the first LED 16a is illuminated.

Meanwhile, when the battery 5 is in a degraded state, the lighting mode of the display 16 changes in two different manners depending on the SOC. The degraded state corresponds to a state where the FCC is equal to or less than the FCC_CDI. In other words, the degraded state corresponds to a state where degradation of the battery 5 is advancing. In other words, the degraded state also corresponds to a state where it is (or can be) estimated that the battery 5 is close to malfunctioning.

In the degraded state, the display 16 illuminates in the following manner.
(i) When the SOC is greater than or equal to 25%, the first and the second LEDs 16a, 16b are illuminated.
(ii) When the SOC is less than 25%, the first LED 16a is illuminated.

It means that, in the degraded state, only the first and the second LEDs 16a, 16b are illuminated even if the battery 5 is fully charged. Thus, the user can identify degradation of the battery 5 based on a condition that the third and the fourth LEDs 16c, 16d are not illuminated despite long hours of continued charging.

### (2-1-8) Correspondence of Terminologies

In the aforementioned embodiments, the positive electrode path 27 corresponds to one example of a current path in the overview of the embodiment. One of the first fuses 41a, 41b corresponds to one example of the first fuse in the overview of the embodiment. One of the two second fuses 42a, 42b corresponds to one example of the second fuse in the overview of the embodiment. The TR terminal 25 or the DS terminal 26 corresponds to one example of the output terminal in the overview of the embodiment. The device TR terminal 205 or the device DS terminal 206 corresponds to one example of the input terminal in the overview of the embodiment. The discharge prohibition command or the discharge prohibition signal corresponds to one example of the command in the overview of the embodiment. In a case where the inhibition command is outputted to the communication circuit 61, the inhibition command corresponds to one example of the command in the overview of the embodiment.

### [2-2. Other Embodiments]

The present disclosure may be implemented in various forms as mentioned below, for example, without being limited to the aforementioned embodiment.

(3-1) In FIG. 7, the temperature detector 44 may be on the first region 410 and the middle region 440, but does not have to be on the second region 420, for example. In this case, the entirety of the temperature detector 44 may be situated on the first region 410 or the middle region 440. Alternatively, a part of the temperature detector 44 may protrude from the first region 410 and the middle region 440.

Alternatively, for example, the temperature detector 44 may be on the second region 420 and the middle region 440, but does not have to be on the first region 410. In this case, the entirety of the temperature detector 44 may be situated on the second region 420 or the middle region 440. Alternatively, a part of the temperature detector 44 may protrude from the second region 420 and the middle region 440.

Alternatively, for example, the temperature detector 44 may be on the first region 410, but does not have to be on the second region 420 and the middle region 440. In this case, the entirety of the temperature detector 44 may be situated on the first region 410. Alternatively, a part of the temperature detector 44 may protrude from the first region 410.

Alternatively, for example, the temperature detector 44 may be on the second region 420, but does not have to be on the first region 410 and the middle region 440. In this case, the entirety of the temperature detector 44 may be situated on the second region 420. Alternatively, a part of the temperature detector 44 may protrude from the second region 420.

Alternatively, for example, the temperature detector 44 may be on the middle region 440, but does not have to be on the first region 410 and the second region 420. In this case, the entirety of the temperature detector 44 may be situated on the middle region 440. Alternatively, a part of the temperature detector 44 may protrude from the middle region 440. In this case, the temperature detector 44 may be selected to match the size of the middle region 440, or, on the contrary, the middle region 440 may be defined to match the size of the temperature detector 44.

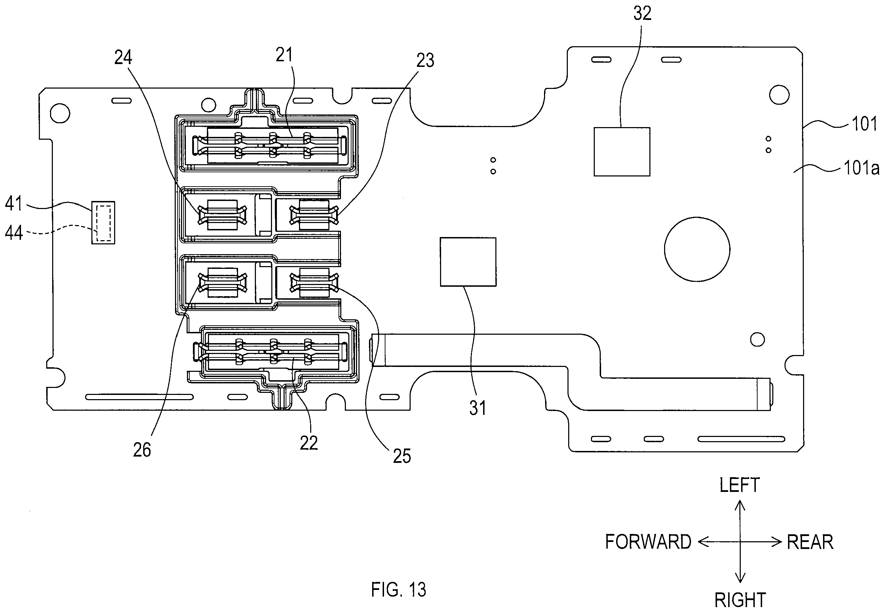

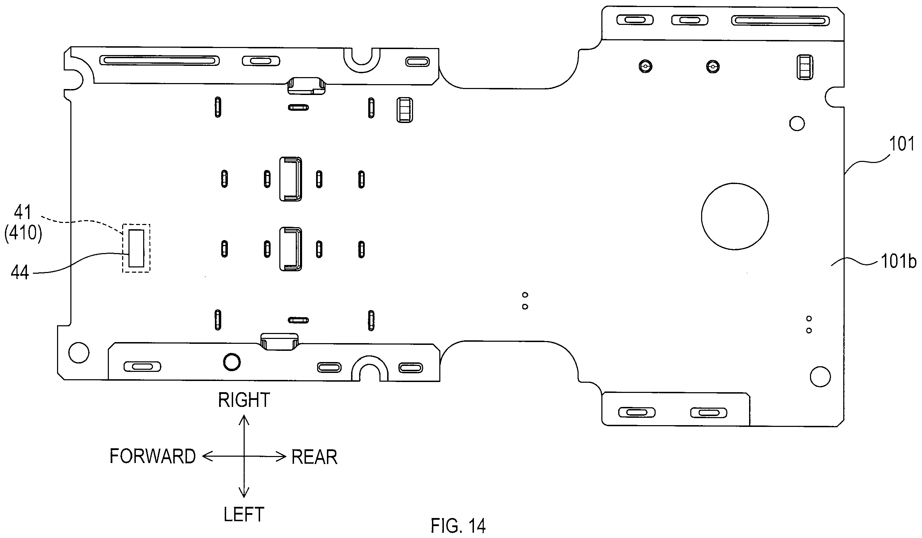

(3-2) As illustrated in FIG. 13 and FIG. 14, the protector 40 may include a protection circuit (the first protection circuit 41), for example. In this case, the temperature detector 44 may face the first protection circuit 41 across the circuit board 101. In other words, the temperature detector 44 may be situated in the first region 410 on the second surface 101b. In FIG. 13 and FIG. 14, the entirety of the temperature detector 44 is situated in the first region 410. However, a part of or the entirety of the temperature detector 44 may be situated outside the first region 410.

(3-3) The protector 40 may include three or more protection circuits. For example, a third protection circuit may be on the first surface 101a in addition to the first and second protection circuits 41, 42. In this case, a region on the first surface 101a where the third protection circuit is mounted is called a third mount region, and a region on the second surface 101b situated exactly at the back of the third mount region is called a third region.

In this case, the temperature detector 44 may be situated, in addition to the middle region 440 or in place of the middle region 440, at an additional first middle region between the third region and the first region 410, and/or at an additional second middle region between the third region and the second region 420.

The temperature detector 44 may be situated on the first region 410, on the second region 420, and/or on the third region. In other words, the temperature detector 44 may face at least one of the three or more protection circuits via the circuit board 101.

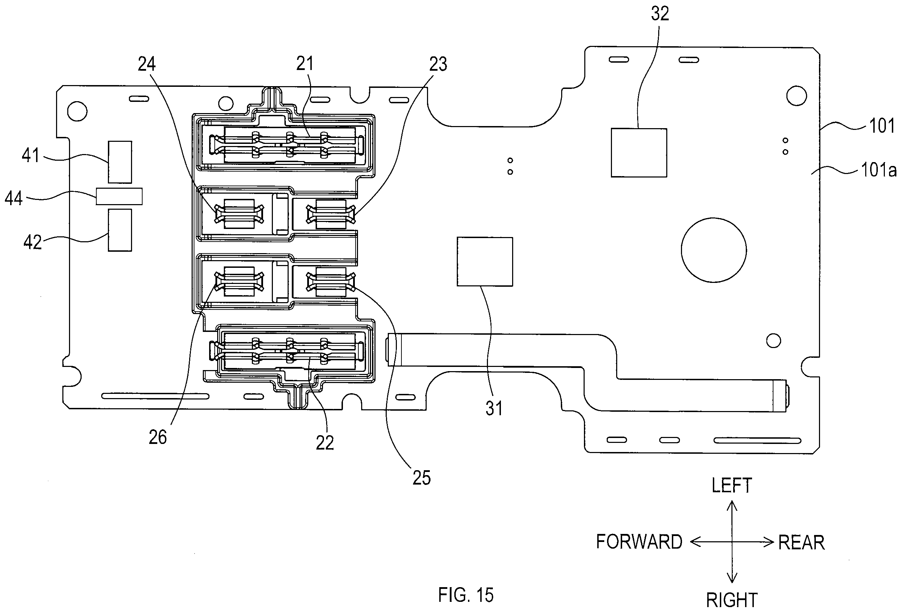

(3-4) As illustrated in FIG. 15, the temperature detector 44 may be situated on the first surface 101a. In other words, the temperature detector 44 may be situated on a surface where the protector 40 (specifically, the first and second protection circuits 41, 42) is mounted. FIG. 15 shows an example where the temperature detector 44 is disposed between the first protection circuit 41 and the second protection circuit 42. In this case, the first protection circuit 41 and/or the second protection circuit 42 may be in contact with the temperature detector 44 or may be situated away from the temperature detector 44.

(3-5) Each of the first surface 101a and the second surface 101b may have a protection circuit mounted thereon. For example, the first protection circuit 41 may be situated on the first surface 101a, and the second protection circuit 42 may be situated on the second surface 101b.

(3-6) Each of the first and second protection circuits 41, 42 and the temperature detector 44 may be in any form or may have any shape. For example, the first protection circuit 41, the second protection circuit 42, and/or the temperature detector 44 may have a shape different from a rectangular parallelepiped. The first protection circuit 41 and/or the second protection circuit 42 may be in a form different from an SMD.

(3-7) The first protection circuit 41 may include one fuse, or may include three or more fuses. The same applies to the second protection circuit 42.

(3-8) The first heater 41c may include one first resistor, or may include three or more first resistors. The second heater 42c may include one second resistor, or may include three or more second resistors.

(3-9) The first protection circuit 41 does not have to include the first heater 41c. The second protection circuit 42 does not have to include the second heater 42c.

(3-10) A heat dissipation member (or a heat sink) may be mounted near the first protection circuit 41 and the second protection circuit 42. The heat dissipation member can inhibit temperature of the first protection circuit 41 and/or the second protection circuit 42 from increasing. The heat dissipation member dissipates heat transferred from the first protection circuit 41 and/or the second protection circuit 42 to the heat dissipation member to the atmosphere (surrounding space).

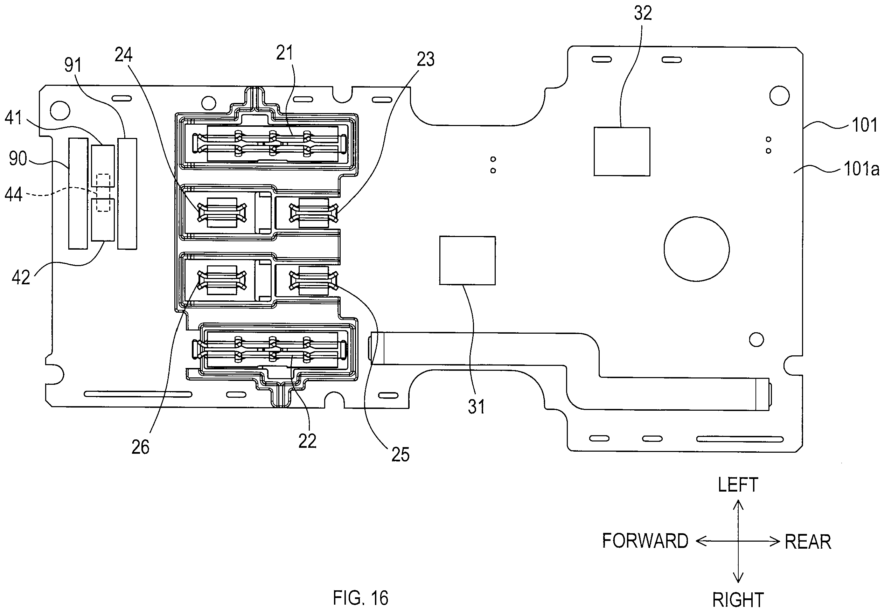

As shown in FIG. 16, for example, the heat dissipation member may include two copper plates 90, 91. In FIG. 16, the two copper plates 90, 91 are mounted on the first surface 101a of the circuit board 101. The heat dissipation member may include only one copper plate, or may include three or more copper plates. The heat dissipation member may be in a form different from the copper plate. The heat dissipation member may have any shape or may contain any material that can function as a heat sink.

(3-11) The discharge inhibition process may include interrupting the positive electrode path 27 or the negative electrode path 28 in the battery pack 10. More specifically, the battery pack 10 may include a path breaker switch on the positive electrode path 27. The path breaker switch completes or interrupts the positive electrode path 27. In a normal operation, the control circuit 31 may turn on the path breaker switch to thereby complete the positive electrode path 27. The control circuit 31 may turn off the path breaker switch to thereby interrupts the positive electrode path 27 in the discharge inhibition process. The path breaker switch may be situated on the negative electrode path 28.

(3-12) Functions of an element in the aforementioned embodiments may be achieved by two or more elements, or a function of an element may be achieved by two or more elements. Alternatively, functions of two or more elements may be achieved by an element, or a function of two or more elements may be achieved by an element. A part of the configuration of the aforementioned embodiments may be omitted. Alternatively, at least a part of the configuration of the aforementioned embodiments may be added to or replaced with the configuration of another one of the aforementioned embodiments.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A battery pack (10) for an electric work machine (200), the battery pack comprising:
a battery (5) including a positive electrode and a negative electrode;
an attachment port (4) configured to be detachably attached to the electric work machine (200), the electric work machine being configured to receive an electric power from the battery to thereby be driven;
a current path (27; 28) configured to (i) be coupled to the positive electrode or the negative electrode and (ii) deliver a discharge current from the battery to the electric work machine;
at least one fuse (41a; 41b; 42a; 42b) (i) on the current path and (ii) configured to melt to thereby interrupt the current path;
a temperature detector (44) configured to output a temperature signal indicating a fuse temperature, the fuse temperature corresponding to a temperature of the at least one fuse;
a control circuit (31) configured to (i) obtain the fuse temperature based on the temperature signal and (ii) output a command to reduce or stop the discharge current based on the fuse temperature obtained having satisfied or satisfying a discharge inhibition requirement, the discharge inhibition requirement being required to reduce or stop the discharge current.

2. The battery pack for an electric work machine according to claim 1,
wherein the discharge inhibition requirement is satisfied based on the fuse temperature having reached a first temperature threshold.

3. The battery pack for an electric work machine according to claim 1 or 2,
wherein the control circuit is configured to cancel the command based on (i) the command being outputted or having been outputted and (ii) the fuse temperature being less than or equal to a second temperature threshold.

4. The battery pack for an electric work machine according to any one of claims 1 to 3,
wherein the electric work machine includes a manual switch (213) configured to be manually moved by a user of the electric work machine to thereby direct to drive the electric work machine, and
wherein the control circuit is configured to cancel the command based on (i) the command being outputted or having been outputted, (ii) the fuse temperature being less than or equal to the second temperature threshold, and (iii) the manual switch not being manually moved.

5. The battery pack for an electric work machine according to claim 3 or claim 4,
wherein the second temperature threshold is smaller than the first temperature threshold.

6. The battery pack for an electric work machine according to any one of claims 1 to 5, further comprising:
a circuit board (101) having the at least one fuse and the temperature detector mounted thereon.

7. The battery pack for an electric work machine according to claim 6,
wherein the circuit board includes a first surface (101a) and a second surface (101b), the second surface corresponding to a surface situated on an opposite side of the first surface,
wherein the at least one fuse is mounted on the first surface, and
wherein the temperature detector is mounted on the second surface.

8. The battery pack for an electric work machine according to claim 7,
wherein the at least one fuse includes a first fuse (41a; 41b), and
wherein the temperature detector at least partially faces the first fuse across the circuit board.

9. The battery pack for an electric work machine according to claim 8,
wherein the at least one fuse further includes a second fuse (42a; 42b),
wherein the first fuse and the second fuse are on the first surface and disposed away from each other, and
wherein the temperature detector at least partially faces a middle region across the circuit board, the middle region being between the first fuse and the second fuse on the first surface.

10. The battery pack for an electric work machine according to claim 9,
wherein the temperature detector at least partially faces, across the circuit board, (i) the first fuse and/or the second fuse, and (ii) the middle region.

11. The battery pack for an electric work machine according to any one of claims 1 to 10, further comprising:
an output terminal (25; 26) configured to (i) be coupled to an input terminal (205; 206) of the electric work machine based on the attachment port being attached to the electric work machine, and (ii) deliver the command to the input terminal via the output terminal.

12. The battery pack for an electric work machine according to any one of claims 7 to 11, further comprising:
an output terminal (25; 26) on the first surface configured to (i) be coupled to an input terminal (205; 206) of the electric work machine based on the attachment port being attached to the electric work machine, and (ii) deliver the command to the input terminal via the output terminal.

13. A method of inhibiting a discharge current in a battery pack (10) for an electric work machine, the method comprising:
detecting a temperature of a fuse (41a; 41b; 42a; 42b), the fuse being on a current path (27; 28), the current path being configured to deliver the discharge current from a battery (5), the battery being in the battery pack; and
reducing or stopping the discharge current in a case where the temperature of the fuse satisfies a discharge inhibition requirement, the discharge inhibition requirement being required to reduce or stop the discharge current.

14. The method according to claim 13 further comprising:
mounting the fuse on a first surface (101a) of a circuit board (101); and
mounting a temperature detector (44) on the second surface (101b) of the circuit board, the temperature detector being configured to detect the temperature of the fuse, the second surface corresponding to a surface situated on an opposite side of the first surface.
